# DEMANDE DE BREVET EUROPEEN

(11) **EP 4 760 947 A1**
(43) Date de publication de la demande: **17.06.2026**
(21) Numéro de dépôt: 25219822.1
(22) Date de dépôt: 01.12.2025
(51) Int. Cl.: H01M 50/383, H01M 50/308

(54) **AGENCEMENT DE VENTILATION AVEC PROTECTION PARE-FLAMME POUR BOÎTIER DE BATTERIE(S), ET PROCEDE D'ASSEMBLAGE**

(30) Priorité: 13.12.2024 FR 2414140
(71) Demandeur: Purflux Filtration, 78280 Guyancourt (FR)
(72) Inventeur: BONNE, Samuel, 14350 SOULEUVRE EN BOCAGE (FR)
(74) Mandataire: Plasseraud IP

(57) **Abrégé**

L'agencement (1) de ventilation pour boîtier de batterie inclut un corps (2) de montage, recouvrant par le dessus une ouverture du boîtier et un pourtour d'ouverture défini par une paroi (P) du boîtier, un canal étant prévu dans le corps en s'étendant jusqu'à un capot (3). Le canal guide un échappement gazeux (FG) provenant de l'intérieur du boîtier et le capot peut s'éjecter en cas de forte surpression. Une grille ou composant protecteur (4), typiquement métallique et ainsi thermiquement résistante, assure une protection anti-feu en se plaçant sous le corps (2) à l'opposé du capot. Le composant (4) inclut des attaches (5) s'engageant à l'intérieur du boîtier et obture le canal par le dessous tout en étant fixé indépendamment à la paroi (P) du boîtier, afin de conserver la protection même en cas de fonte du corps qui se raccorde à la paroi (P) en périphérie du composant.

## Description

### Domaine technique

La présente divulgation relève du domaine des systèmes de batterie, notamment des équipements de ventilation permettant une évacuation de gaz et/ou une compensation de pression pour batterie. L'invention concerne plus particulièrement un agencement, se montant sur le boîtier d'une batterie/alimentation électrique, qui offre des possibilités de ventilation en disposant d'une protection vis-à-vis du risque de propagation de flammes et de fonte de composants plastiques à température élevée. Un procédé d'assemblage d'un tel dispositif est également proposé.

### Arrière-plan technologique

On connaît, par le document US 12100855, un dispositif de compensation de pression, qui inclut une base ajourée, un couvercle et une membrane poreuse placée sous la base pour laisser passer les gaz enfermés dans un module de batterie, par exemple un module de batterie équipant un véhicule. En cas d'instabilité (pression interne trop élevée), la membrane prévue sous le couvercle se soulève à un tel niveau qu'une pointe prévue sur la base du dispositif de compensation perce la membrane, ce qui permet au gaz de sortir avec un débit plus significatif. Le couvercle est monté non serré dans sa fixation/appui pour permettre une compensation de pression. Un écran protecteur, sous forme de grille rigide, est placé sous la membrane en étant fixé par des vis d'ancrage du dispositif. Cet écran forme un pare-flamme (pare-étincelles) et vise à empêcher tout objet étranger de pénétrer dans le module de batterie après une surpression ayant conduit à percer la membrane et possiblement à éjecter le couvercle.

Un tel dispositif prévoit une connexion rigide du dispositif. Ceci peut poser des difficultés en cas de montée rapide de la température, notamment en l'absence ou latence d'éjection du couvercle (alors que la membrane a été percé). Comme le couvercle en plastique et la base en plastique chauffent très vite, à des températures dépassant largement 500°C, par exemple vers 900 ou 1000°C, les matériaux plastiques - même agréés pour les dispositifs de ventilation des boîtiers de batteries - fondent rapidement, ce qui peut créer des décollements ou désagrégation des parties. En pratique si le maintien serré et ajusté de la grille est perdu, des particules incandescentes, fines particules métalliques fondues et/ou des matières combustibles qui sortent du boîtier au travers de la grille, des flammes peuvent se former et l'incendie est susceptible de se propager dans le véhicule.

Il existe donc un besoin pour des dispositifs de ventilation de conception simple, minimisant la complexité d'assemblage sur la paroi de boîtier, prévenant la propagation de feu en cas d'emballement thermique avec des risques de perte de matière plastique, et utilisables pour la compensation de pression des batteries.

### Résumé

La présente divulgation vient améliorer la situation.

A cet effet, il est proposé un agencement de ventilation pour boîtier de batterie, en particulier pour boîtier comprenant une ou plusieurs batteries, l'agencement comprenant :
- un corps en matériau plastique pourvu d'une paroi latérale, le corps formant un connecteur qui se raccorde par une connexion sur une paroi du boîtier afin de couvrir (par l'extérieur du boîtier) une ouverture prévue dans/délimitée par la paroi du boîtier ;
- un canal, prévu dans le corps pour guider un écoulement gazeux s'échappant du boîtier par l'ouverture suivant un axe longitudinal du canal ;
- un élément d'obturation solidarisé au corps, l'élément d'obturation (ou couvercle) recouvrant le canal sur un côté externe opposé à l'ouverture ;
- une partie protectrice portée par ou recouvrant le corps dans une disposition sous-jacente au corps sur un côté interne à l'opposé de l'élément d'obturation, la partie protectrice incluant ou consistant en un composant structurel (de type minéral par exemple), dont une portion centrale de protection pare-flamme obture ou recouvre l'ouverture en s'étendant transversalement à l'axe longitudinal ; et
- une zone de bride, portée par ou formée sur le composant structurel en s'étendant autour de la portion centrale, la zone de bride pouvant être disposée à l'extérieur du boîtier en étant engagée par le corps et/ou solidarisée au corps, la zone de bride permettant de plaquer le composant structurel contre une portion de bordure de l'ouverture (portion de la paroi du boîtier) ;
avec la particularité que le composant structurel, métallique ou consistant en un matériau réfractaire thermorésistant, est choisi parmi une grille et un bouclier perméable aux gaz et inclut des moyens de fixation qui :
- sont configurés pour s'étendre et s'engager sous un ou des rebords de la paroi du boîtier, à l'opposé du corps (côté de la paroi opposé au corps) ; et
- permettent, par un effet anti-retrait du composant résultant de l'engagement des moyens de fixation (qui correspond à une retenue axiale par la paroi du boîtier), au composant structurel de se verrouiller dans une position fixe de montage sur l'ouverture. Grâce à cela, le composant structurel peut conserver sa position fixe, aussi bien en cas de destruction de la connexion du corps sur la paroi de boîtier qu'en cas de fonte du matériau plastique du corps.

Ce verrouillage du composant structurel pare-flamme (et typiquement pare-étincelles) par des moyens de fixation intégrés (pour *in fine* un auto-verrouillage) apporte une simplicité de montage combinée à une sécurité en cas de fonte importante ou même totale du corps de l'unité de ventilation. La grille ou bouclier, avec ses attaches de fixation, peut essentiellement inclure de l'acier, par exemple avec une structure en acier dont la température de dégradation est nettement supérieure à 500°C (sachant que l'acier ne fond pas à des températures de l'ordre de 1200°C).

Le composant structurel peut s'étendre à l'extérieur du boîtier, à l'exception d'extrémités de retenue des attaches/moyens de fixation, ce qui permet à ce composant de facilement s'intégrer dans une unité de ventilation préassemblée. A titre d'exemple, une telle unité peut se clipper par l'extérieur, via la grille ou bouclier, directement sur la paroi de boîtier, avant éventuellement d'exercer un serrage supplémentaire par des organes de fixation du corps disposés en périphérie du canal.

Plus largement, on comprend que l'insertion et retenue des moyens de fixation, sur des rebords de la paroi, est réalisée par des matériaux thermorésistants (comme l'acier, ou composant métallique/réfractaire adapté), ce qui permet au composant structurel de rester accroché à la paroi en cas de fonte totale du boitier des matériaux plastiques venant recouvrir ce composant.
Le corps peut présenter une base, typiquement une base adaptée pour entourer ou envelopper latéralement la grille ou bouclier. Une jonction étanche peut être réalisée via cette base, par exemple avec au moins un joint porté par la base. La base constitue une partie de connexion qui porte un élément d'étanchéité annulaire, de préférence logé dans une gorge intérieure de la paroi de base ou flasque, afin de réaliser une étanchéité annulaire avec le boîtier. La gorge intérieure peut déboucher axialement à l'opposé de l'élément d'obturation (à l'opposé de la portion d'obturation, typiquement radiale prévue dans le capot/élément d'obturation). L'axe longitudinal du canal peut être un axe de symétrie ou un axe central de la base du corps.

Dans des exemples de réalisation, les moyens de fixation n'interfèrent pas avec la section de passage formée par l'ouverture ou seulement en longeant un bord de délimitation de cette ouverture. Ils peuvent venir en butée chacun contre un bord de fixation (par exemple un épaulement ou bord de marge de la face intérieure de la paroi) formé dans la paroi et orienté à l'opposé du canal, ce bord étant de préférence prévu adjacent et/ou autour de l'ouverture. Cette fixation s'oppose à un retrait longitudinal du composant structurel pare-flamme du côté extérieur, tandis que la zone de bride s'oppose à un enfoncement du composant (qui est ainsi plus large que l'ouverture).

Les moyens de fixation peuvent inclure des parties ou extensions de plaque venues directement de matière avec le reste du composant structurel, par exemple en étant reliés par des lignes de pliage/plis ou coudes.

Le composant structurel peut présenter une ou plusieurs des particularités suivantes :
- il est réalisée d'une seule pièce ;
- la zone de bride peut être formée de façon annulaire continue ou discontinue, par exemple en correspondant à ou incluant une portion de marge permettant à la grille ou bouclier de dépasser de l'ouverture/en dépassant au moins localement le diamètre ou dimension caractéristique de l'ouverture.
- le matériau du composant structurel peut-être monomatière ou composite (composite à matrice céramique ou à matrice mécanique par exemple, typiquement sans matière plastique).

Optionnellement, la partie protectrice inclut le composant structurel (typiquement réalisé d'une pièce avec une grille ou partie de grille formant la portion centrale) et une ou au moins deux pièces additionnelles d'enveloppement périphérique distinctes de la portion centrale. Alternativement, la partie protectrice consiste en une pièce formant le composant structurel. La partie protectrice peut consister en une grille métallique, d'une épaisseur millimétrique (supérieure ou égale à 1 mm et inférieure à 6 mm par exemple).

Dans des réalisations, la partie protectrice peut présenter une ou plusieurs des particularités suivantes :
- la partie protectrice inclut ou consiste en une pièce qui définit une portion radiale indéformable, de préférence plane et surmontant l'ouverture.
- le bouclier peut être un assemblage qui combine une première partie constituant une grille ou un élément d'impaction (pour l'effet pare-flamme) et une deuxième partie de fixation périphérique par rapport à la première partie.
- les moyens de fixation incluent deux ou trois éléments saillants de retenue (saillants axialement à l'opposé du canal).
- les éléments saillants de retenue font saillie chacun longitudinalement depuis une face du composant orientée à l'opposé du corps/canal, vers l'intérieur jusqu'à une partie de blocage (possiblement formée comme une extrémité des éléments saillants de retenue), pour venir en prise axiale sur l'intérieur de la paroi du boîtier.
- les éléments saillants de retenue peuvent être insérés via l'ouverture.
- les parties de blocage sont agencées en position sous-jacente à la paroi du boîtier.
- les éléments saillants de retenue, insérés via l'ouverture, peuvent dépasser d'une délimitation de l'ouverture et/ou peuvent être engagés afin de disposer les parties de blocage en position engagée de verrouillage/position sous-jacente à la paroi du boîtier.
- les éléments saillants de retenue réalisent le verrouillage/permettent au composant structurel de s'auto-verrouiller dans la position fixe de montage sur l'ouverture.
- les parties de blocage peuvent être espacées axialement d'un plan passant par la zone de bride, d'une distance sensiblement égale à une épaisseur de la paroi du boîtier autour de l'ouverture.
- chacun des éléments saillants peut être un élément d'insertion venant s'insérer axialement/longitudinalement au travers de l'ouverture (par exemple dans un état radialement déformé vers l'intérieur ou en traversant une zone d'extension ou lobe de l'ouverture), de préférence en étant disposé contre une zone de circonférence de l'ouverture, sachant qu'une rotation (pour quitter l'extension ou lobe) ou un effet de rappel radialement vers l'extérieur s'applique à la fin de l'insertion.

Le composant structurel peut être solidarisé en rotation au corps par des organes de fixation qui sont distincts des éléments saillants de retenue, par exemple prévus du côté du canal en étant répartis sur une périphérie de l'entrée du canal.
Le bouclier ou grille métallique inclut de tels deuxièmes moyens de fixation, par exemple sous forme de parties déformées directement dans une plaque/grille constitutive du composant structurel. Par exemple, la grille peut présenter des bossages percés et découpés pour former chacun un organe de positionnement, apte à recevoir un insert prévu dans la base du corps.

Le cas échéant lors du montage du corps sur la paroi, le composant est au préalable agrafé ou retenu par bouterolle ou clippé au corps plastique pour se solidariser à la base de ce corps. Lorsque le composant est une grille (ou pièce similaire provenant d'une plaque), celui-ci peut être clippé ou maintenu par des clips ou des éléments agrafes prévus sur la partie radialement la plus extérieure de la grille/plaque.
La fixation est robuste et la grille peut être à ouvertures étroites (par exemple à fentes d'environ 0,9 à 3 mm de largeur), ce qui permet une protection anti-feu efficace et à effet barrière vis-à-vis de particules incandescentes susceptibles - en cas de défaut de recouvrement du canal, d'être propulsées directement de l'intérieur du boîtier vers l'extérieur. Un acier inox ou un acier à revêtement ou traitement anticorrosion, ou éventuellement un matériau à base d'aluminium peut constituer la grille (ou le composant adapté pour cette séparation vis-à-vis d'étincelles et effet pare-flamme).

Dans des exemples de réalisation, le corps est fixé à ladite paroi par des parties de fixation réalisant la connexion (connexion corps - boîtier) en périphérie de la grille ou bouclier et permettant de comprimer le composant structurel (grille par exemple prise en sandwich) entre une face axiale annulaire du corps (base du corps de préférence) et la paroi du boîtier. Le cas échéant, les parties de fixation, qui optionnellement incluent des vis ou éléments de raccordement qui utilisent des orifices auxiliaires de montage, peuvent permettre une connexion amovible et typiquement une réutilisation du corps (par exemple en cas de défaut constaté au niveau du boîtier) ou un remplacement d'unité de ventilation.
La grille ou le composant structurel peut inclure des organes de positionnement, creux et orientés à l'opposé des moyens de fixation pour la retenue du composant structurel, permettant de bloquer en position le corps (sur le composant) avant de réaliser la connexion (à la paroi) en coopérant avec des pions ou inserts portés par le corps.
De préférence, les pions ou insert s'engagent chacun avec serrage dans une cavité d'un organe de positionnement correspondant, typiquement avec un premier niveau d'insertion dans la cavité.

La grille, ou élément de plaque formant le composant structurel peut être serrée suffisamment (axialement par le corps pour un plaquage contre le boîtier/paroi) lors d'une action de serrage s'exerçant lors de l'établissement de la connexion pour :
- verrouiller le premier niveau d'insertion ou permettre un enfoncement axial supplémentaire des pions ou insert dans lesdites cavités, avec un deuxième niveau d'insertion dans la cavité ; et
- rendre la grille et le corps solidaires et fixes l'un par rapport à l'autre sans possibilité de mouvement dans la position fixe de montage sur l'ouverture, même en cas de retrait ultérieur ou destruction des moyens de fixation réalisant la connexion.

Dans des exemples de réalisation des attaches ou éléments de retenue saillants permettant la retenue du composant pare-flamme, on prévoit au moins une des dispositions suivantes :
- une fixation par clip(s) du composant.
- les éléments saillants de retenue portent ou incluent chacun un clip permettant un emboîtement sans rotation de la partie protectrice.
- une connexion du composant non déverrouillable par l'extérieur ou tant que le corps recouvre le composant (mais possiblement déverrouillable par l'intérieur/ en ayant accès à l'intérieur de la paroi).
- les éléments de retenue peuvent être répartis sur la circonférence de l'ouverture, par exemple à 120° lorsqu'ils sont au nombre de trois (le recours à trois clips (ou davantage) limite la dureté du clippage tout en obtenant une retenue efficace et robuste).
Indépendamment du nombre d'élément saillants de retenue portés par le composant structurel, l'écartement angulaire entre deux éléments de retenue peut être au minimum de 80°.

Dans un mode de réalisation, l'agencement qui comporte la paroi pourvue d'une délimitation (généralement circulaire de préférence) de l'ouverture, dispose d'un mode de fixation rotatif du composant structurel par rapport à la paroi, tandis que le corps peut disposer de parties de fixation et de positionnement anti-rotation/prévenant la rotation à la fois du corps et du composant structurel.
Typiquement, les deux ou trois éléments saillants de retenue font partie d'un ensemble de connexion rotatif, de préférence un ensemble de connexion baïonnette par coopération avec des partie de rebord ou gorges prévues sur la paroi du boîtier.
On comprend que l'ensemble de connexion rotatif peut verrouiller la position fixe de montage lors d'une rotation du composant autour d'un axe de l'ouverture, qui est de préférence confondu ou parallèle à l'axe longitudinal du canal. Ce type de connexion peut permettre, si besoin, une séparation de l'unité de ventilation par rapport au boîtier, le cas échéant en déconnectant/désolidarisant les parties ou organes de fixation qui finalisent le montage, comme par exemple par dévissage de vis situées en périphérie du canal et autour du composant structurel.

Selon une particularité, la paroi (qui fait partie de l'agencement) est prise en sandwich entre la zone de bride (côté externe) et les parties de blocage (côté interne) formant des extrémités terminales des éléments saillants de retenue. Le composant structurel inclut une grille dont les ouvertures ont une dimension au moins égale à 0,5 mm et préférentiellement jusqu'à 5 mm (par exemple avec une géométrie étroite et allongée de ces ouvertures). La grille peut inclure la zone de bride dans une partie de marge annulaire de la grille qui est en chevauchement direct sur la paroi du boîtier.
Les éléments saillants de retenue peuvent être prévus dans une zone de marge découpée sur un secteur angulaire, typiquement un secteur ne dépassant pas 5 ou 10°. Les éléments de retenue font saillie par exemple depuis une pliure. Les éléments saillants peuvent être élastiquement déformables pour permettre un clippage de la grille/composant structurel.

Quelle que soit la structure prévue pour réaliser l'effet de retenue sur le dessous de la grille (côté opposé au canal délimité par le corps), on comprend que la grille/ composant structurel pare-flamme de ventilation peut être aussi solidarisé au corps, de préférence en étant portée par le corps même si ce dernier peut disposer d'une connexion amovible sur le boîtier de batterie réalisée de façon séparée de la retenue permise par la grille. La retenue, par un clippage ou autre fixation utilisant des éléments de retenue saillants vers l'intérieur, est réalisée pour que la grille reste intègre (sans séparation de ces éléments de retenue par rapport au reste de la grille) et solidaire du boîtier de batterie lorsque le composant connecteur à couvercle (unité de ventilation) est fondu.
Il est préférable que la grille comporte plusieurs éléments de retenue venant intérieurement en prise contre le pourtour de l'ouverture du boîtier, sans pour autant faire pénétrer la plaque de la grille dans le boîtier. Ce type de fixation est alors réalisée sans pièce externe additionnelle conçue séparément de la grille ou composant structurel similaire, et peut être obtenue typiquement sans soudure et/ou sans faiblesse (amincissement) pouvant conduire au détachement d'une partie de la grille.

Dans des réalisations de l'agencement, on prévoit une ou plusieurs des particularités suivantes :
- la partie protectrice est en une seule pièce qui constitue/définit la grille, possiblement sans former la moindre partie accessible (du côté du canal/extérieure) voire visible lorsque cette partie protectrice est recouverte par le corps et que le canal est obturé par l'élément d'obturation.
- le corps et le composant structurel sont fixés l'un à l'autre pour former une unité de ventilation préassemblée, qui s'étend suivant l'axe longitudinal entre une première extrémité axiale par laquelle vient se monter l'élément d'obturation et une deuxième extrémité axiale formant une face, de préférence sensiblement plane, qui inclut la face intérieure de la grille.
- les moyens de fixation sont inséparables du reste du composant structurel, par exemple en étant conçus avec la grille ou bouclier (les moyens de fixation n'existent pas sans le composant structurel).
- les moyens de fixation sont distribués à différentes positions angulaires sur une zone périphérique de cette face intérieure.
- la grille est plate ou plane au moins dans la portion centrale.
- les moyens de fixation comportent deux ou trois éléments saillants de retenue (et plus largement au moins deux) qui sont joints à la face intérieure (face préférentiellement plane), par une zone de pli délimitée entre deux bords coupés.
- la zone de pli est sensiblement perpendiculaire aux deux bords coupés.
- les plis ou zones de plis sont réalisées de façon à réduire localement une extension radiale de la face intérieure.
- une bordure de l'ouverture, circulaire de préférence, se situe à l'aplomb des plis, zones de plis ou lignes de jonction avec les éléments de retenue.

Selon une particularité le corps de l'agencement porte l'élément d'obturation de façon amovible. De préférence, l'élément d'obturation est mobile ou amovible longitudinalement par rapport au corps, typiquement en recouvrant actuellement le canal par une porte une portion radiale de l'élément d'obturation.
L'élément d'obturation peut former un couvercle d'urgence apte à être éclaté, éjecté ou déplacé plus loin du canal (pour libérer un passage permettant l'échappement massif d'un flux gazeux en cas d'emballement thermique. En étant fixé de manière élastique ou de façon lâche pour pouvoir sauter à distance du corps ou s'écarter significativement, cet élément d'obturation peut très rapidement libérer un débouché axial du canal (débouché éloigné/prévu à l'opposé du composant structurel), lorsqu'un seuil de surpression est atteint ou dépassé dans le canal.

Dans des options de réalisation, le montage de l'élément d'obturation peut être prévu avec :
- une construction en une seule pièce plastique pour former le capot/élément d'obturation.
- le corps qui peut s'insérer partiellement dans un volume intérieur du capot/élément d'obturation, typiquement délimité par la jupe du capot, ou alternativement entourer une jupe du capot.
- un emboîtement élastique de l'élément d'obturation par rapport au corps, de sorte que le corps peut retenir axialement le capot, par exemple par utilisation de reliefs ou ergots portés par une jupe du capot ou pièce amovible formant l'élément d'obturation, dans une configuration d'obturation/protection du canal.
Alternativement, le corps peut présenter au moins un relief intérieur ou extérieur pour la retenue de l'élément d'obturation. On comprend que la portion radiale et/ou une jupe de l'élément d'obturation peut être ajourée dans des options.
Dans des réalisations de l'agencement, l'élément d'obturation consiste en un capot/couvercle moulé en une seule pièce de matière plastique, de préférence sans partie élastiquement déformable/flexible dans la partie d'obturation venant boucher le canal.

L'élément d'obturation peut s'éjecter sous l'effet de l'accumulation de pression dans le canal, ce qui n'est pas le cas du boîtier et du support de connexion (avec le corps) monté sur le boîtier, sachant que le flux gazeux peut s'échapper massivement (à très haut débit par exemple) du boîtier via le canal. Alternativement, un capot ajouré formant l'élément d'obturation peut rester en place en offrant une section globale de passage importante, les voies de passage pouvant inclure des orifices axiaux de passage décalés par rapport au canal et en chevauchement (en regard) d'une zone ou région périphérique annulaire de fixation.

Dans des options de réalisation, la grille a des ouvertures réparties dans des groupes d'ouvertures espacées à intervalle régulier, en ayant chacun une forme de fente (avec le même espacement entre deux ouvertures adjacentes au sein d'un groupe). Les ouvertures ont par exemple une dimension au moins égale à 0,5 mm, par exemple atteignant ou dépassant 2 ou 3 mm, par exemple avec des ouvertures atteignant ou dépassant les 10 mm (voire 30 mm, au moins pour la plus grande dimension).

La paroi latérale du corps paroi latérale peut présenter une jupe intérieure qui permet de former, autour du canal, une gorge supérieure débouchant vers le haut/à l'opposé de l'ouverture de paroi du boîtier. Le corps se raccorde sur l'ouverture du boîtier sans s'insérer dans l'ouverture, et se fixe par au moins deux ouvertures d'ancrage prévus dans la paroi en périphérique de l'ouverture (en étant espacées de l'ouverture qui peut être une ouverture simple/non cloisonnée).
Des passages axiaux peuvent être communs/alignés dans l'ensemble formé par le corps, la partie protectrice à grille pouvant s'étendre sous une structure de cloisonnement du canal, qui fait partie intégrante du corps. Lorsqu'une membrane perméable aux gaz est prévue dans le dispositif, celle-ci peut être portée (directement ou indirectement) par le corps en obturant le canal, la membrane pouvant constituer une partie de filtration apte à retenir des poussières.

Le corps peut être à base d'un matériau rigide, éventuellement en plastique, qui est dépourvu de portion radiale ou obturante, à l'éventuelles exception de fines cloisons. Plus généralement, le corps est pourvu d'une paroi latérale entourant la zone de circulation de gaz et est configuré pour se raccorder, de façon amovible ou permanente, sur le boîtier au niveau de/sur l'ouverture du boîtier.

Selon une particularité, le dispositif peut inclure une membrane perméable aux gaz, portée par le corps en obturant le canal à l'opposé du média filtrant métallique. Cette membrane constitue une partie de filtration. La membrane, si elle est présente, peut être solidarisée au support de connexion formé par le corps (base du corps), typiquement par le dessus correspondant à un côté opposé au média filtrant métallique. La membrane peut être maintenue espacée du composant (la plaque ou grille de protection) par des cloisons prévues dans le canal.
La membrane est flexible et à partie fragile pour ne plus obturer le canal dans un état perforé ou éclaté de la membrane obtenu en cas de surpression dans le canal au-delà d'un seuil de surpression.

Typiquement, la base de connexion appartient à une première partie préassemblée, incluant le corps, l'éventuelle membrane, la grille ou composant structurel/bouclier (métallique de préférence) sous-jacent au corps, tandis que l'élément d'obturation correspond à une deuxième partie préassemblée. La deuxième partie se monte sur la première partie et reste attachée à cette première partie tant qu'un seuil de surpression n'est pas atteint, la fixation résultant d'un emboîtement ou d'un encliquetage résistant aux variations de pression dans le canal dans un mode de fonctionnement normal (distinct d'un mode d'urgence).

Le corps, par exemple pourvu de cloisons séparatrices, peut être optionnellement réalisé d'une seule pièce. Le corps présente une extrémité ou face supérieure/distale du joint de contact avec le boîtier/paroi de boîtier. La paroi latérale annulaire du corps, servant à former la circonférence du canal, peut s'étendre longitudinalement autour d'un axe central entre le flasque ou base qui permet un ancrage sur le boîtier, en disposant typiquement d'une surface inférieure sensiblement plane et perpendiculaire à l'axe central, et un bord annulaire axialement distal de l'ouverture du boîtier.

Dans des réalisations permettant au composant structurel (qui est de préférence plat) d'être disposé parallèlement à un plan de l'ouverture, une ou plusieurs des particularités suivantes sont prévues :
- l'élément d'obturation inclut une portion radiale qui forme une barrière recouvrant axialement le canal, possiblement sans ouverture traversant la portion radiale.
- l'agencement de ventilation comporte, en regard du canal, un organe perceur, porté par l'un parmi l'élément d'obturation et le corps, pour perforer ou éclater une membrane placée dans le canal en cas de surpression dans le canal au-delà d'un seuil de surpression.
- des attaches d'ancrage de la plaque ou composant structurel de protection sont disposées dans une zone annulaire en chevauchement avec le bord de l'ouverture prévue dans la paroi du boîtier, cette zone annulaire entourant les ouvertures du composant et étant entourée par le joint ou élément d'étanchéité annulaire de l'agencement de ventilation.
Avec ces dispositions, il est permis de réaliser un agencement compact, au niveau d'une ouverture de boîtier, avec un canal (avec ou sans membrane) protégé des salissures par un élément d'obturation pour assurer une compensation de pression (en mode de fonctionnement normal) tout en disposant d'une sécurité dans un mode d'urgence avec échappement gazeux massif, en s'assurant de percer la membrane et/ou d'éjecter l'élément d'obturation. Ceci est permis typiquement en évitant de conserver l'élément d'obturation sur le chemin de gaz très chaud : on évite ainsi (par l'éjection) de faire fondre des parties plastiques (dont l'élément d'obturation est constitué), et le composant structurel peut agir efficacement pour prévenir ou retarder la création de flammes.

Selon un autre aspect, il est proposé un procédé d'assemblage d'un dispositif ou agencement de ventilation qui a un effet pare-flamme tout en minimisant les risques de perte de la protection dans la zone par laquelle un flux gazeux doit s'échapper en urgence (pour une protection prolongée vis-à-vis du risque d'incendie et de retombée de matériau plastique fondu à l'intérieur du boîtier).

A cet effet il est proposé un procédé d'assemblage d'un agencement de ventilation pour boîtier de batterie, en utilisant une grille ou un bouclier perméable aux gaz apte à se monter sous un corps (en matériau plastique) prévu pour équiper le boîtier de batterie, le corps délimitant un canal formant une sortie accessible via une ouverture du boîtier lorsque le corps est fixé avec serrage axial sur une paroi du boîtier par une connexion pour recouvrir l'ouverture, un élément d'obturation recouvrant le canal tout en permettant des échanges gazeux de compensation et/ou une évacuation gazeuse d'urgence, le procédé comprenant les étapes consistant essentiellement à :
- choisir le composant structurel formé par la grille ou bouclier, métallique ou consistant en un matériau réfractaire thermorésistant, afin qu'il présente une géométrie et un dimensionnement adaptés pour une fonction pare-flamme en pouvant recouvrir l'essentiel ou la totalité de l'ouverture ;
- réaliser une première fixation du composant structurel formé par la grille ou bouclier, au corps, en le disposant sous-jacent au corps à l'opposé d'une sortie du canal pour permettre l'évacuation de gaz provenant du boîtier (l'évacuation pouvant se faire même à haut débit dans des options préférées, grâce à un retrait de l'élément d'obturation) ;
- réaliser une deuxième fixation, précédant ou suivant la première fixation, pour connecter le composant structurel à une paroi de délimitation de l'ouverture, d'une part en s'appuyant sur la paroi sur un côté externe du boîtier par une zone de bride prévue dans le composant structurel, et d'autre part en engageant des moyens de fixation, portés par le composant structurel sous ladite paroi du boîtier, à l'opposé du corps, pour venir en prise axiale sur l'intérieur de cette paroi du boîtier ; et
le procédé permettant, après la première fixation et la deuxième fixation, de verrouiller axialement le composant structurel dans une position fixe de montage sur l'ouverture et dans une position de protection pare-flamme du canal, les moyens de fixation appartenant au composant structurel (en étant intégrés dans ce composant) de sorte que ce dernier peut conserver la position fixe de montage sur l'ouverture aussi bien en cas de destruction de la connexion avec serrage axial du corps sur la paroi de boîtier qu'en cas de fonte du matériau plastique du corps.

L'agencement peut conserver l'effet de protection, même dans des conditions de températures très élevées. Eventuellement, l'obtention de l'agencement est permise en fournissant une unité de ventilation préassemblée qui ne recouvre pas encore l'ouverture du boîtier de batterie. On obtient ainsi un dispositif formant un composant fonctionnel préassemblé, qui peut se monter par vissage, quart de tour, ou autre opération simple de montage sur la région du boîtier (sur la paroi) bordant l'ouverture du boîtier. Une fixation simple de ce type peut permettre d'obtenir l'étanchéité grâce à un joint rapporté sur la base/embase du dispositif, tandis que l'élément d'obturation reste dans sa configuration d'obturation non étanche, emboîté sur le corps constituant un support de connexion. Le dispositif peut donc être transporté, conditionné et livré de façon robuste, avec un capot/élément d'obturation, et permet de limiter le nombre d'étape(s) de mise en place du dispositif/unité de ventilation sur le boîtier de batterie. La base du corps peut être élargie et/ou pourvue d'ouvertures axiales pour la mise en place d'organes d'attache pour la connexion au boîtier alors que l'élément d'obturation est déjà solidarisé au corps.

Le composant structurel peut consister en une plaque métallique, typiquement ajourée pour constituer une grille. Selon une particularité du procédé d'assemblage, la première fixation est réalisée avant la deuxième fixation en entourant un bord externe du composant structurel par une base du corps qui porte un élément d'étanchéité annulaire,
et dans lequel la deuxième fixation est permise par au moins deux éléments saillants de retenue, appartenant au moyens de fixation, qui :
- chacun, font saillie longitudinalement depuis une face du composant orientée à l'opposé du corps (à l'opposé du canal), vers l'intérieur jusqu'à une partie de blocage, pour venir en prise axiale sur l'intérieur de la paroi du boîtier.

Dans des options préférées, ces éléments de retenue sont insérés via l'ouverture, pour disposer les parties de blocage en position sous-jacente à la paroi du boîtier et permettent au composant structurel de s'auto-verrouiller dans la position fixe de montage sur l'ouverture. Ce mode de fixation permet une versatilité dans l'ordre des étapes de montage : on peut aussi bien réaliser la première fixation d'abord, avant la deuxième fixation, que l'inverse, éventuellement en pouvant réaliser un verrouillage secondaire (constituant une troisième fixation venant après les deux autres) à l'aide de parties de fixation séparées/distinctes du composant structurel.

Dans des options, la deuxième fixation est réalisée en immobilisant des protrusions (pions ou autres) formées sur la base pour faire saillie par rapport à une face axiale de la base du corps, en étant suffisamment courtes ou formées sur une partie en retrait de la face axiale de la base pour ne pas traverser la paroi (aussi sans dépasser d'une face intérieure du composant). On comprend que la partie protectrice ou le composant structurel intègre (de préférence directement), de façon distribuée et par exemple proche de l'ouverture, les organes de positionnement pour l'ancrage/fixation au corps 2, dans une région radialement plus intérieure que la zone de contact du joint J porté par le corps 2.

Le composant structurel formé par la grille ou bouclier est avantageusement conservé solidaire du boitier. Il est permis d'intégrer ce composant structurel pare-flamme au plus près du débouché de l'ouverture du boîtier, avec par exemple une face de ce composant qui définit une face extérieure de l'agencement, apte à se placer en vis-à-vis de l'intérieur du boîtier. Le cas échéant cette face est formée par une grille métallique se situant dans un même plan qu'un joint périphérique placé à l'interface entre la paroi de boîtier et la base du corps.

Un élément d'obturation en une seule pièce peut être prévu dans l'agencement, à l'opposé du composant structurel formé par la grille ou le bouclier. Pour la ventilation d'urgence, soit un montage compatible avec une éjection est prévue (en cas de surpression), soit le montage de l'élément d'obturation ne permet pas ce type d'éjection mais des voies de passage sont prévues dans l'élément d'obturation et/ou sont présentes pour permettre de contourner une portion d'obturation de cet élément. Typiquement, ces voies de passages peuvent être distribuées autour de ou dans une jupe de l'élément d'obturation.

### Brève description des dessins

D'autres caractéristiques, détails et avantages apparaîtront à la lecture de la description détaillée ci-après, et à l'analyse des dessins annexés, sur lesquels :
la figure 1 est une vue en perspective éclatée d'une unité de ventilation apte à se monter directement sur une paroi d'un boîtier de batterie, afin d'obturer une ouverture de cette paroi.
la figure 2 illustre, par une perspective, la moitié d'un agencement de ventilation ayant un montage similaire à celui de l'unité de la figure 1 en utilisant une grille à l'entrée du canal de dégazage et un élément d'obturation monté sur la sortie du canal.
la figure 3 est une vue en perspective de dessus d'un exemple non limitatif de composant structurel pare-flamme, ici sous forme de grille plane.
la figure 4 montre un exemple de montage de l'unité de ventilation sur une face externe d'une paroi du boîtier de batterie.
la figure 5 montre schématiquement des séquences d'un premier exemple d'ancrage du composant structurel à une paroi du boîtier lorsqu'il dispose de clips formant des attaches dans un composant identique ou similaire à celui de la figure 3.
la figure 6 montre schématiquement des séquences d'un deuxième exemple d'ancrage à une paroi du boîtier lorsque le composant structurel dispose d'éléments d'une connexion de type baïonnette assurant un verrouillage par rotation de chaque ergot de baïonnette dans une gorge et/ou de façon à se bloquer sous la paroi.

### Description des modes de réalisation

Il est exposé ci-après, de façon détaillée, plusieurs exemples de modes de réalisation non limitatifs. Sur les différentes figures, des références identiques indiquent des éléments identiques ou similaires.

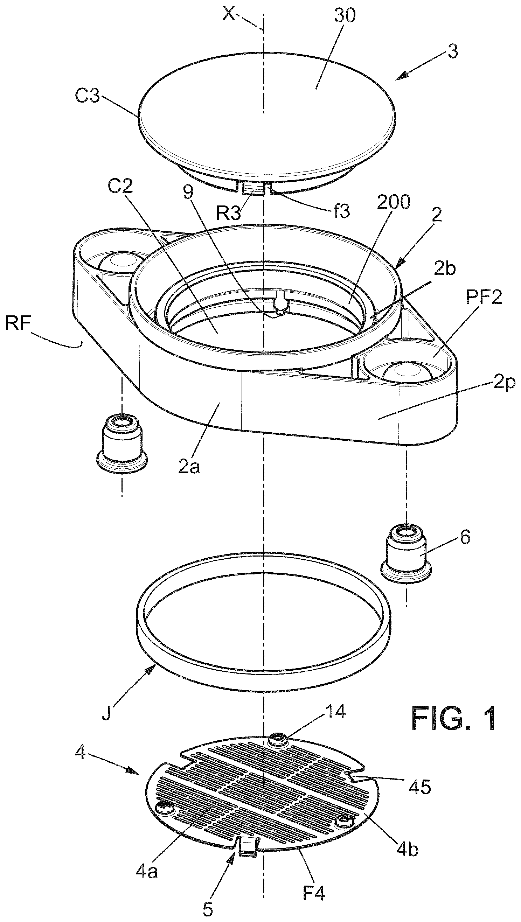

En référence aux figures 1, 2 et 4, il est montré une unité de ventilation/compensation de pression pouvant être livrée comme une unité préassemblée, prête à obturer une ouverture O d'un boîtier de batterie en se montant typiquement du côté d'une face externe d'une coque ou plaque/paroi P du boîtier. Dans des options préférées, le dispositif ou unité de ventilation présente une partie de montage (formant support de capot/couvercle) incluant ou consistant en un corps 2 permettant une connexion au boîtier, en étant pourvu de moyens de fixation PF2, par exemple formés comme une bride annulaire ou comme des pattes d'insertion/retenue pour le maintien en position sur le boîtier de batterie (sur la paroi P). Les moyens de fixation PF2 peuvent être prévus dans une base 2a du corps 2, qui recouvre le boîtier. L'élément ou corps 2 peut se composer essentiellement d'un connecteur rigide, en matériau plastique, optionnellement pourvu d'un joint J monté ou rapporté sur ce connecteur. Le corps 2 peut avoir éventuellement une configuration aplatie ou compacte en hauteur, avec une épaisseur (correspondant à une hauteur) qui est par exemple au moins trois fois inférieure à une largeur maximale ou diamètre externe. Le corps 2 peut être prévu d'une seule pièce en matériau plastique, non-renforcé ou renforcé (par exemple par des fibres de verre, fibres de carbone ou similaire) ou matériau moulé similaire.

Le dispositif de ventilation 1 assemblé est muni de son joint J, afin d'obturer l'ouverture O en s'assurant que les échanges gazeux soient réalisés avec une filtration (avec effet de retenue de particules solides) par un composant structurel 4 tel qu'une grille puis éventuellement par un nombre adapté de membranes. Dans l'exemple non limitatif des figures 1-2 et 5, on comprend que le joint J peut s'appuyer sur une zone annulaire de siège prévue sur le boîtier, autour de l'ouverture O, typiquement sans pénétrer intérieurement dans le boîtier. Ce joint J peut être un joint annulaire, par exemple en matériau élastomère, venant axialement en contact avec la paroi P, sur une face externe du boîtier.
Sur les figures 1, 2 et 4, on peut voir que le corps 2 peut présenter une portion radiale annulaire qui inclut ou forme le fond d'une gorge G2 orientée vers la paroi P en permettant de recevoir le joint J annulaire. Le joint J peut éventuellement présenter (avant compression axiale obtenue par l'ancrage/fixation) une hauteur typiquement plus grande que la profondeur de la gorge G2 ou tout du moins est dimensionné pour dépasser/déborder axialement à l'extérieur de cette gorge G2. Plus généralement, le joint J peut faire saillie vers le bas (ici vers le boîtier) en présentant ainsi une surface qui s'étend hors de la gorge G2 et apte à s'appuyer axialement contre le boîtier de batterie. Optionnellement, les faces annulaires de délimitation de la gorge G peuvent présenter, chacune, des nervures ou reliefs saillants de retenue du joint J annulaire.

Les figures 1, 2 et 4 montrent un montage d'un élément d'obturation 3 qui fait partie de l'unité de ventilation. Ensuite, l'unité de ventilation se fixe sur la paroi P pour former un agencement 1de ventilation équipant l'ouverture O. L'agencement 1 peut inclure une ou plusieurs parties filtrantes. Ici, la partie pare-feu ou pare-flamme, typiquement disposée au plus près de l'ouverture O, est constituée par le composant structurel 4 qui peut être métallique (alliage/acier) et/ou en un matériau thermorésistant adapté (matériau réfractaire, minéral). Une géométrie plate du composant structurel 4 pare-feu peut être choisie, par exemple sans que ce composant 4 ne s'étende plus haut qu'une zone de fond de gorge où est reçu le joint J.
Le composant structurel 4, constitué par exemple en un bloc pour faciliter le montage, est agencé en vis-à-vis de l'intérieur du canal C2 (côté entrée de ce canal) pour un effet de séparation des particules solides ou étincelles, même dans des conditions de chaleur avec un flux gazeux dépassant 500 ou 600°C ou même 1000°C. Le composant structurel 4, résultant d'une étape de perforations d'une plaque métallique, a un format de grille de protection. Il est par exemple formé d'une seule pièce, avec une forme plane/aplatie (donc plus mince que le corps 2 ou même plus mince que la base 2a du corps 2).

Le corps 2, de structure creuse et ouvert à deux extrémités axiales opposées, permet la circulation de gaz pour que l'élément d'obturation soit soumis à la pression interne du boîtier. Le corps 2 peut éventuellement disposer d'une membrane flexible (non représentée), poreuse/perméable au gaz, qui permet un effet de compensation de pression. La membrane s'étend transversalement sous l'élément d'obturation 3 en étant ainsi non exposée/ visible depuis l'extérieur. L'élément d'obturation 3 est monté dans une configuration d'obturation non étanche, compatible avec un échappement gazeux qui contourne ou traverse cet élément d'obturation 3 lors d'un fonctionnement normal/habituel.

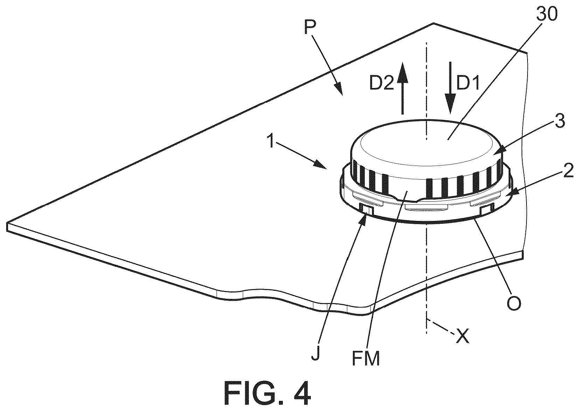

En référence à la figure 4, l'agencement 1 peut fonctionner suivant au moins un mode parmi les suivants, de préférence les deux :
- mode normal avec une ventilation, dans les deux sens D1 (entrant) et sortant (D2) suivant la direction de l'axe central X, avec le composant 4 (ici caché/non visible) sous-jacent au corps 2,
- et un mode pour la ventilation d'urgence dans le sens D2, typiquement après libération de l'extrémité d'évacuation du corps 2 du fait de la dégradation et/ou éjection de l'élément d'obturation 3, qui s'avère efficace sans dégradation/démontage du composant structurel 4 thermorésistant et à effet pare-flamme).

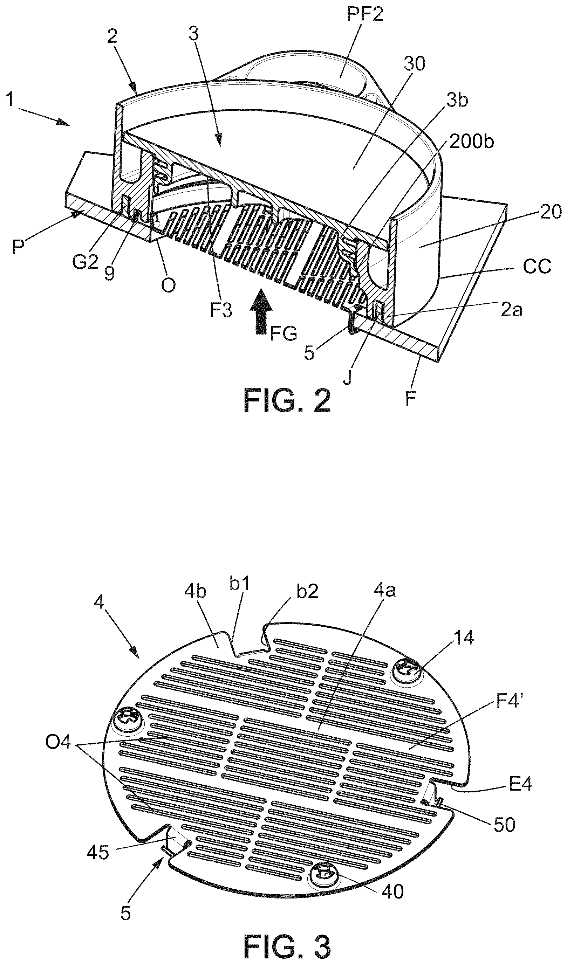

Comme visible sur les figures 1, 2 et 4, l'élément d'obturation 3 présente une portion radiale 30 (à effet d'obturation et/ou déviation vis-à-vis du flux axial), qui peut être visible de l'extérieur, formée dans une pièce en polymère résultant d'un moulage (à base d'un matériau thermoplastique) ou matériau plastique adapté. La portion radiale 30, non ajourée, peut être plus large que la section de passage formée par le canal C2. L'élément d'obturation 3 est stable et fixe dans un état clippé ou emboîté sur le corps 2, par utilisation de clips ou reliefs R3 adaptés pour venir en prise contre un bord (dans une gorge circonférentielle par exemple) ou contre relief de retenue adapté b200 (figure 2) prévu sur une face de délimitation du canal C2.
A l'état monté, le couvercle ou élément d'obturation 3 est maintenu espacé de la paroi P et du composant 4 par la base 2a du corps 2. Bien qu'on ait montré ici un composant structurel 4 conçu comme une plaque ajourée, une grille ou autre pièce ou élément considéré comme une couche seule, il est possible - bien entendu - de combiner le composant structurel avec au moins une couche additionnelle surmontant/recouvrant la portion centrale 4a, par exemple pour obtenir un effet de filtration accru, et/ou recouvrant la zone de bride 4b. Le composant structurel 4 peut alors faire partie d'une partie protectrice PM qui est aplatie ou assemblée hauteur faible par rapport aux deux autres dimensions de cette partie protectrice PM.

Comme bien visible, le corps 2 peut disposer d'une paroi latérale 20, d'une extrémité inférieure formant une base 2a ouverte, de sorte que le corps 2 délimite un canal C2 qui débouche par une extrémité supérieure du corps 2 qui est une extrémité d'évacuation. Ici les termes « inférieure » et « supérieure » ne préjugent pas de la disposition finale montée du dispositif de ventilation mais facilitent l'exposé fait en référence à certaines des figures. Ainsi, l'élément d'obturation peut surmonter le corps 2 ou un élément de conduite 200 de celui-ci. La portion de radiale 30 peut reposer sur un bord 2b annulaire de l'élément de conduit ou élément de conduite 200 formé dans le corps 2 à distance axiale du composant structurel, typiquement avec le bord 2b qui constitue un dessus de l'élément de conduite 200, distal de la base 2a constituant l'extrémité inférieure du corps 2.
Le canal C2 s'étend longitudinalement entre l'extrémité de base et l'extrémité d'évacuation, typiquement autour d'un axe central du corps 2 qui est un axe pouvant traverser/passer par l'ouverture O à l'état monté du dispositif 1 de ventilation, comme illustré par exemple sur la figure 4. Cet axe peut constituer l'axe longitudinal X du canal C2. La paroi latérale 20 peut être une paroi latérale extérieure du corps 2 qui inclut ou est raccordée à un conduit ou élément de conduite 200, comme visible sur la figure 1.

La gorge inférieure G2 (figure 1) prévue dans le corps 2 permet de loger le joint J ou élément d'étanchéité, par exemple sous forme d'anneau, de façon radialement espacée de l'élément de conduite 200 délimitant la voie ou canal C2 pour la circulation de gaz. Ici de manière non limitative, le joint J est inséré dans la base 2a qui est plus large que l'élément de conduite 200. Plus généralement, le joint J peut être porté par la base 2a en étant écarté du canal C2 et de l'ouverture O. Le joint J peut ainsi être espacé/éloigné d'une zone d'évacuation de gaz très chauds dans des situations de surchauffe ou d'emballement thermique.

Le canal C2 est décalé et espacé intérieurement par rapport à la région périphérique de fixation pour la fixation étanche au boîtier P du corps 2. Le cas échéant une gorge supérieure est formée, axialement plus à l'extérieure que la gorge G2, en permettant d'écarter la paroi latérale extérieure de la conduite 200. Une jupe du corps peut alors être formée comme une sous-partie de l'élément de conduite 200, laquelle est adaptée pour constituer une partie femelle qui reçoit une partie d'insertion/mâle 3b prévue sur le côté intérieur de l'élément d'obturation 3. Lorsqu'une membrane perméable aux gaz est prévue, celle-ci fait partie d'un ensemble préassemblé. Lorsqu'une telle membrane est absente, un ensemble constituant une unité de ventilation préassemblée peut se composer du corps 2 formé en une seule pièce, de l'élément d'obturation 3 (qui peut consister en une pièce formant capot/couvercle) et de la grille ou plaque/bouclier formant le composant 4 pare-flamme, avec en outre les composants de jonction pouvant inclure un seul joint J et des moyens périphériques de fixation PF2 du corps pour le raccordement/connexion CC à la plaque ou paroi P de boîtier P. Le composant 4 est de préférence réalisé d'un seul bloc (une seule pièce). Des vis 6 ou éléments d'ancrage similaires peuvent coopérer avec les moyens périphériques de fixation PF2 : on obtient ainsi des moyens de fixation (PF2, 6) réalisant la connexion CC du corps 2 à la paroi P, en périphérie du composant structurel 4.

En référence aux figures 1 et 2, le composant structurel 4 peut être sous la forme d'une plaque ayant une bordure externe annulaire. Une portion centrale de protection 4a de cette plaque est ajourée, avec des ouvertures O4 (optionnellement allongées et étroites, délimitées entre deux bords longs rectilignes) pour constituer une grille. La portion centrale de protection 4a est entourée par la zone de bride 4b qui permet au composant structurel 4 d'être plus large que l'ouverture O à recouvrir.

Le canal C2 présente une entrée adjacente au composant 4 et délimitée par une face latérale interne de la base 2a. Une telle face interne peut avoir une section élargie par rapport à une section de passage délimitée par l'élément de conduite 200, en raison d'un rétrécissement ou épaulement interne qui peut être en regard de la sone de bride 4b.
Le canal C2 peut servir aussi bien à une amenée d'air qu'à une évacuation d'air, sachant que l'élément d'obturation 3 ne forme aucun contact annulaire étanche (par exemple en incluant des fentes f3 pour le contact contre l'élément de conduite 200 et/ou en étant ajouré/dimensionné de façon à laisser des espacements sur sa périphérie à l'état monté.
Dans certaines variantes, par exemple utilisant au moins un clapet anti-retour, il peut être prévu que le canal C2 serve uniquement à l'évacuation d'air.

Le canal C2 du corps peut se présenter sous différentes formes avec, dans certains cas, la possibilité de former différentes voies d'évacuation en aval de l'ouverture O. Dans les cas illustrés, le canal C2 est délimité par l'élément de conduite 200 et/ou une partie du corps 2, afin de guider un écoulement gazeux FG (figure 2) s'échappant du boîtier P par l'ouverture O (l'écoulement sortant par l'ouverture passant en totalité par le canal C2) et au travers des ouvertures O4 du composant structurel 4.
On comprend que le composant 4 peut former une paroi pare-flamme fixée à la paroi P indépendamment de la fixation du corps 2. Dans des réalisations, cela peut permettre par exemple d'assembler l'agencement 1 sans que la paroi P du boîtier ne nécessite le moindre orifice ou creux d'ancrage (distinct/séparé de l'ouverture O) à proximité du canal C2 et à l'aplomb du composant structurel 4.

### Exemples de structure du composant structurel

Dans l'exemple de la figure 1, il est prévu que le composant 4 soit très ajouré dans une partie centrale 4a en regard/à l'aplomb de la portion radiale 30 de l'élément d'obturation 3 tout en disposant d'une partie de marge formant la zone de bride 4b. Une forme annulaire de la zone de bride 4b peut être préférée, ou alternativement une distribution discontinue est choisie, en intégrant plusieurs pattes réparties dans différents secteurs angulaires de la périphérie du composant 4. Dans le cas des figures 1 et 3, la zone de bride 4b peut être discontinue en raison d'encoches E4 obtenues par découpe et pliage de parties de plaque qui forment les moyens de fixation 5.
Quelle que soit son intégration autour de la partie couvrant l'ouverture O, la zone de bride 4b permet une retenue axiale, éventuellement en incluant des organes 14 de positionnement et fixation du corps 2, avec une formation de reliefs externes sur la face F4 dans cette zone de bride 4b. La zone de bride 4b est radialement plus intérieure que la/chaque région de fixation RF, annulaire ou non, du corps 2 pour l'ancrage dans la paroi P.
Le corps 2 peut optionnellement disposer, autour de la paroi 20 par exemple, de pattes radiales 2p ou zones de marge avec des orifices/conduits de montage pouvant constituer les moyens de fixation PF2. Le composant structurel 4 peut être dimensionné sans extension ou bord recouvert par ces pattes radiales ou zones périphériques servant à la connexion CC (pas de chevauchement ou interférence entre, d'une part la zone de fixation composant - plaque, et d'autre par la zone de fixation corps - plaque avec serrage du joint J).

Le composant structurel 4 peut être métallique/sans la moindre partie plastique et agencé sans contact ou fixation avec une autre pièce métallique, sans être traversé en outre par une autre pièce métallique. Par exemple dans le cas la figure 2, le composant structurel est seulement en contact avec la paroi P et avec la base 2a du corps, et à l'écart des organes d'ancrage venant s'engager sur les moyens de fixation PF2 prévus à la périphérie du corps 2. L'utilisation de vis ou d'organe(s) d'ancrage (moyens de fixation complémentaires 6 par rapport aux moyens PF2 pour la retenue à la paroi P) peut être optionnellement complétée par l'utilisation d'anneaux fendus ou organes métalliques qui constituent des limiteurs de compression, afin de former une interface de contact avec les surfaces plastiques constituées par exemple par le boîtier (paroi P) et le corps 2. Toutefois, la zone de bride 4b peut éventuellement, à elle seule, permettre un tel effet de limitation de compression lors de la fixation du corps 2 par la coopération (avec serrage axial) des moyens de fixation PF2 et des moyens de fixation complémentaires 6 portés par ou montés sur la paroi P. Les moyens de fixation complémentaires 6 peuvent réaliser la connexion CC de façon amovible.

Le composant structurel 4 peut être plat ou éventuellement bombé vers l'extérieur, en étant formé de préférence par une plaque. Une grille ou bouclier perméable aux gaz peut être alors constitué. Dans le cas des figures 1 et 2, la portion centrale 4a sensiblement plane permet à ce composant 4 de former une grille, de préférence sans relief à l'aplomb de l'ouverture O, qui n'a pas d'impact sur l'encombrement général de l'agencement 1.
Le composant 4 est seulement métallique ou consiste en/inclut un matériau réfractaire thermorésistant. Le composant 4 peut être réalisé en une seule pièce qui est par exemple dépourvue de plastique ou matière fusible/qui fond à moins de 500°C. Alternativement, plusieurs éléments de grille peuvent être assemblés pour former le composant structurel 4.

La zone de bride 4b, portée par ou formée sur le composant structurel 4 en s'étendant autour de la portion centrale 4, est disposée à l'extérieur du boîtier (parallèlement à la paroi P par exemple) en étant solidarisé au corps 2, par exemple de manière :
- directe, par utilisation de pions 9 ou inserts s'engageant sur cette zone de bride 4b, dans plusieurs zone de réception correspondant à des organes de positionnement 14 ; et
- indirecte, par un serrage s'exerçant entre le corps 2 et la paroi P du boîtier, à l'aide des moyens de fixation PF2, 6 et de la disposition interposée (axialement) de la zone de bride 4b entre la paroi P et au moins une surface d'appui prévue dans la base 2a, sur un côté intérieur par rapport au joint J (comme par exemple bien visible sur la figure 2).

Indépendamment du mode de fixation du composant structurel 4 au corps, la zone de bride 4b peut permettre de plaquer le composant structurel 4 contre une portion de bordure de l'ouverture O, de façon indépendante d'une action de serrage/placage permise par utilisation du corps 2. Pour cela, le composant structurel 4 inclut des moyens de fixation 5 pour maintenir dans une position fonctionnelle, pare-flamme, le composant structurel 4 avec la portion centrale 4a qui recouvre l'ouverture O (par l'extérieur). Une partie de ces moyens de fixation 5 peut inclure la zone de bride 4b pour un effet anti-enfoncement du composant dans l'ouverture O, et une autre partie de ces moyens de fixation 5 assure un effet anti-retrait ou éloignement par rapport à un plan de l'ouverture O.
Comme dans le cas visible sur la figure 2, les moyens de fixation 5 peuvent s'étendre et s'engager sous un ou des rebords de la paroi P du boîtier, à l'opposé du corps 2.

### Exemples d'insertion d'éléments de retenue portés pat le composant structurel

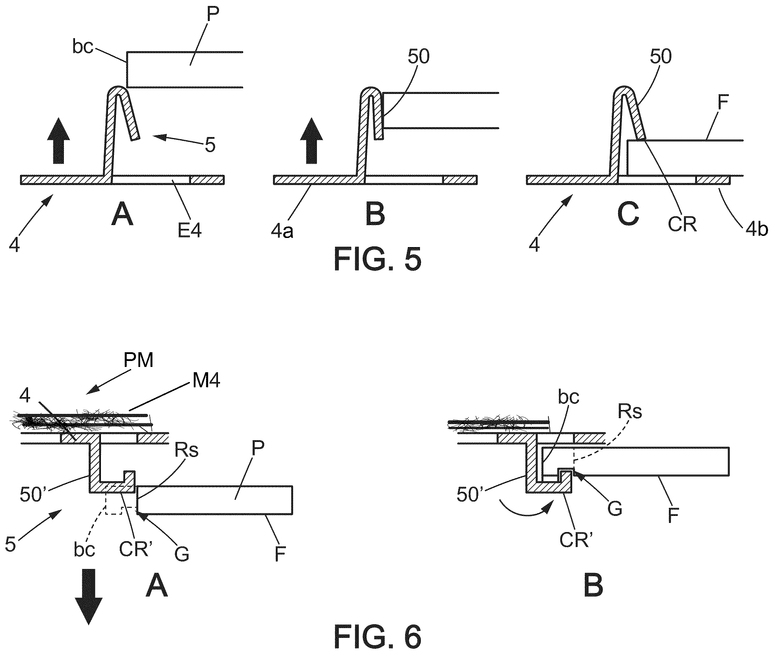

En référence aux figures 5 et 6, une zone d'enserrement ou une zone gorge peut par exemple être délimitée entre la partie/zone extérieure de bride 4b et la portion crochet ou portion de blocage CR, CR' d'un élément de retenue 50 saillant pour passer au travers de l'ouverture O. Le bord circonférentiel bc de cette ouverture O peut présenter différentes géométries, compatibles avec l'insertion de tels éléments de retenue 50 typiquement distribués dans différents secteurs angulaires du composant structurels.
Les partions de blocage CR, CR' peuvent être espacées axialement d'un plan passant par la zone de bride 4b, d'une distance sensiblement égale à une épaisseur de la paroi P du boîtier autour de l'ouverture O.

Dans l'exemple de la figure 5 qui montre la suite de séquences A/B/C lors d'un clippage au travers de la paroi P, le bord circonférentiel bc de l'ouverture O peut permettre de presser, radialement vers l'intérieur, l'élément de retenue 50 saillant lors de son passage dans l'ouverture O, jusqu'à une insertion complète de cet élément de retenue 50. A l'état C inséré, la portion de blocage CR, ici en forme de crochet ou clip, n'est plus pressée radialement vers l'intérieur (cas de l'état B) et peut s'engager contre la face F (interne) de la paroi P sur le côté opposé celui en contact avec la face F4 intérieure. Le composant 4 peut être une grille comme dans le cas des figures 1 à 3 ou présenter toute portion centrale 4a adaptée pour un effet de protection pare-flamme en obturant l'ouverture de façon perméable au gaz.

Une structure avec clips dans les éléments de retenue 50 saillants permet un enserrement axial simple, compatible avec un emboîtement sans rotation de la partie protectrice PM qui inclut le composant 4 sans autre insertion dans l'ouverture 4 que celle des clips. Ici, les éléments de de retenue 50 saillants ne sont pas plus épais que le reste de la grille formant le composant structurel 4. Ils sont obtenus par découpe et pliage, en laissant des encoches E4 distribuées dans la zone de bride 4b. Plus largement on peut prévoir de former les moyens de fixation 5 par ce type de pliage.

Deux, trois éléments saillants de retenue (au moins) peuvent être prévus sur le même côté en saillie de la face intérieure F4, par exemple depuis une pliure ou zone de pli 45 (figure 3). Ils peuvent être chacun joints à la face intérieure F4, typiquement plane, par la zone de pli 45 pouvant être délimitée entre deux bords coupés b1, b2 (bords à composante radiale) comme par exemple illustré sur la figure 3. Lorsqu'ils forment des clips, il peut être prévu deux plis : le premier étant la zone de pli 45 dans le plan de la portion centrale 4a et le second pli étant celui pour former le crochet constituant la portion de blocage CR. Les clips peuvent présenter une forme de crochet coudé en formant un angle inférieur ou égale à 50 ou 60°. Les clips ont par exemple un angle de 30° (ou prévu entre 20 et 50°).

En référence à présent à la figure 6, il est prévu dans un autre exemple de réalisation que le composant structurel 4 s'intercale, axialement, entre la paroi P du boîtier et la base 2a du corps 2 de l'unité de ventilation, sans recours à des clips mais en utilisant des organes ou ergots d'une connexion baïonnette. Dans ce cas, on peut prévoir au moins deux éléments de retenue 50' qui font saillie depuis la face F4 intérieure pour former la partie fonctionnelle d'un ensemble de connexion rotatif, possiblement un ensemble de connexion baïonnette par coopération avec des gorges G prévues sur la paroi P du boîtier.
Plus largement, l'ensemble de connexion rotatif peut permettre de plaquer le composant structurel 4 contre la paroi P, du côté externe, en s'insérant par l'ouverture O qui peut présenter des renfoncements Rs (par exemple chacun en forme de lobe) ou excroissances locales, dans son bord circonférentiel bc de délimitation.

Au moment/état intermédiaire d'insertion des éléments de retenue 50', ceux-ci peuvent passer dans un renfoncement Rs correspondant (cf. Etat A de la figure 6), par exemple répartis de façon diamétralement opposée lorsque deux éléments de retenues également opposés sur le composant 4 sont utilisés. Quel que soit le nombre de ces organes d'une connexion baïonnette, ce passage d'insertion via des renfoncements RS ou fentes peut être suivi d'une action de verrouillage en rotation, par exemple réalisée en tournant le corps 2 au sein de l'unité de ventilation, sachant que :
- le reste du composant structurel 4 s'étend à l'extérieure du boîtier ; et
- le composant 4 a été préalablement rendu solidaire du corps (en étant aussi solidaire en rotation du corps), typiquement par utilisation de pions 9, inserts ou autres moyens anti-rotation.

L'action de verrouillage en rotation est illustrée avec l'état B de montage de la figure 6 (avec la flèche reflétant la rotation réalisée, par exemple autour d'un axe de l'ouverture O). Chaque organe ou élément de retenue 50' se situe alors sous la face F et décalé angulairement par rapport au renfoncement Rs ou passage adapté ayant permis l'insertion axiale. Dans cet état, une portion du bord circonférentiel bc peut s'étendre localement entre une partie de liaison de l'élément de retenue 50' et une partie à ergot venant s'engager dans une gorge G et/ou au-delà d'un cran d'arrêt. Un effet de rappel élastique peut être prévu dans l'élément de retenue 50' pour permettre un serrage ou effet anti-retrait (anti-rotation inverse).
L'axe de l'ouverture O peut être confondu ou être parallèle à l'axe longitudinal X du canal C2. Avec une telle venue en prise par une rotation, on peut obtenir une connexion directe du composant structurel 4 sur la paroi P. On comprend qu'une telle connexion est déverrouillable par l'extérieur, par une manipulation du corps avec rotation inverse.

Indépendamment du mode d'insertion sélectif des éléments de retenue 50, 50', le composant structurel 4 peut éventuellement être monomatière (et monocouche) ou multicouche et/ou intégrant une superposition d'éléments participant à l'effet pare-flamme. Par exemple, la grille du composant structurel 4 peut soutenir un média filtrant M4 à fibres métalliques (non tissé très aéré par exemple, à faible perte de charge) qui filtre le flux ou autre composant de filtration, typiquement accolé au composant structurel 4 ou associé à celui-ci dans la partie protectrice PM. On comprend que la partie protectrice PM reste extérieure au boîtier et peut ne pas dépasser/s'étendre plus haut que la base 2a, par exemple sans venir en contact avec une extrémité inférieure (dans la partie d'insertion 3a par exemple) de l'élément d'obturation 3.

Dans des options, la partie protectrice PM est monomatière ou uniquement métallique. Eventuellement la partie protectrice PM est seulement réalisée en une pièce qui la grille (composant structurel 4 sans surcouche ou élément supplémentaire accolé).
Le corps 2 et le composant structurel 4 sont fixés l'un à l'autre pour former une unité de ventilation préassemblée, qui s'étend suivant l'axe longitudinal X entre une première extrémité axiale par laquelle vient se monter l'élément d'obturation 3 et une deuxième extrémité axiale formant une face, de préférence sensiblement plane, qui inclut la face intérieure F4 de la grille, avec les moyens de fixation 5 qui sont distribués à différentes positions angulaires sur une zone périphérique de cette face intérieure F4.

Typiquement, la retenue du corps 2 pour un ancrage axial sur la paroi P peut être réalisée dans une ou plusieurs régions périphériques situées au-delà d'un bord externe circonférentiel de la partie protectrice PM. Pour assurer le positionnement correct du composant structurel 4 par rapport au corps 2, ce dernier peut présenter un épaulement, des reliefs ou des parties de guidage, coopérant par exemple avec des protrusions, clips ou organes de positionnement 14 prévus sur la face externe F4' du composant structurel 4, éventuellement des bossages ou portions ayant chacun un creux ouvert avec un accès axial denté ou à griffes. La figure 3 illustre la formation de cavités 40 dans de tels organes de positionnement 14 formés comme des bossages percés.
De tels bossages peuvent s'étendre axialement de sorte à présenter un débouché (délimité entre les dents/griffes dans le cas de la figure 3) par une extrémité haute/distale de la face F4' de la cavité. La cavité 40 peut déboucher à une hauteur ou distance axiale, mesurée depuis un plan de la face extérieure F4', qui est supérieure à 2 ou 3 mm et/ou supérieure à une épaisseur du composant structurel 4.

Lorsque la grille ou le composant structurel 4 inclut ces organes de positionnement 14, creux et orientés à l'opposé des moyens de fixation 5, il est permis de bloquer en position le corps 2 avant de réaliser la connexion CC. Ce blocage résulte de l'insertion des pions 9 ou inserts portés par le corps 2 qui s'engagent chacun avec serrage dans une cavité 40 correspondante, chaque cavité ayant un accès axial prévu proche d'une face interne latérale du corps 2. Eventuellement cet engagement de pions 9 s'effectue avec un premier niveau d'insertion dans la cavité 40, avant la solidarisation du composant structurel 4 à la paroi P. Le composant structurel 4, sous forme de grille sur la figure 2, est serrée suffisamment lors d'une action de serrage s'exerçant lors de l'établissement de la connexion CC utilisant les moyens de fixation PF2, 6, afin de :
- verrouiller le premier niveau d'insertion ou permettre un enfoncement axial supplémentaire des pions 9 ou insert dans lesdites cavités 40, avec un deuxième niveau d'insertion (plus élevé) dans la cavité 40 ; et
- rendre la grille et le corps 2 solidaires et fixes l'un par rapport à l'autre sans possibilité de mouvement dans la position fixe de montage de la grille (composant 4) sur l'ouverture O même en cas de retrait ultérieur ou destruction des moyens de fixation PF2, 6.

Dans des modes de réalisation, comme dans le cas non limitatif de la figure 3, le composant structurel 4 est ainsi une grille métallique qui comporte les éléments de retenue 50 et aussi les organes de positionnement 14 relatif par rapport au corps 2. Chacun de ces organes de positionnement 14 peut être réalisé directement sur la grille, en formant par exemple un bossage creux ouvert, pourvu d'un accès axial avec plusieurs griffes ou dents en saillie radialement vers l'intérieur (dents/griffes en saillie intérieurement depuis un pourtour annulaire de cette accès axial), ce qui peut correspondre à une structure d'anneau Grifaxe^{®}. La base 2a du corps 2 peut inclure les tiges, pions 9 ou saillies similaires coopérant avec les extrémités libres/arêtes des griffes ou dents des organes de positionnement 14 pour permettre un blocage ou un pré-couplage du corps 2 avec le composant structurel 4.
Alternativement, la grille ou composant 4 qui forme la portion centrale 4a peut être accrochée au corps 2, typiquement par le dessous de la base 2a, en réalisant un bouterollage ou un encliquetage (effet clip) des organes de positionnement 14, chacun sur un pion 9 ou relief adapté respectif formé sur la base 2a du corps 2.
Plus largement, le composant structurel 4 dispose d'organes de positionnement 14, de préférence incluant une surface ou région d'ancrage, permettant de bloquer en position le corps 2 en immobilisant des protrusions (pions 9 ou autres) formés pour faire saillie par rapport à une face axiale de la base 2a du corps 2. Les protrusion/pions 9 peuvent être suffisamment courtes ou formées sur une partie en retrait de la face axiale de la base 2a pour ne pas traverser la paroi P (c'est-à-dire sans dépasser d'une face intérieure F4 du composant 4. On comprend que la partie protectrice PM ou le composant structurel 4 intègre (de préférence directement), de façon distribuée et par exemple proche de l'ouverture O, les organes de positionnement 14 d'ancrage/fixation pour la retenue du corps 2, dans une région radialement plus intérieure que la zone de contact du joint J porté par le corps 2.

Dans certaines variantes (non représentées), il est prévu une membrane intercalée entre le couvercle ou élément d'obturation 3 similaire et le composant structurel 4 formant la partie protectrice pare-flamme. Le couvercle peut dans ce cas être ajouré, en intégrant des fentes ou ouvertures de circulation d'air dans une portion radiale et/ou dans une jupe de celui-ci. Pour un cas d'évacuation massive de gaz (situation d'urgence / emballement thermique), il est en outre prévu sur l'élément d'obturation 3 un ou plusieurs organes perceurs, orienté(s) vers une ou plusieurs zones de la membrane qui sont chacune éloignées de la portion annulaire de fixation de cette membrane sur le corps. Chaque organe perceur est rigide et par exemple pourvu d'une pointe ou extrémité adaptée pour déchirer/percer la membrane en vis-vis, qui se gonfle en saillie au-dessus de son plan de jonction au corps 2.

Les organes d'attache 6 (vis ou élément d'ancrage par exemple) du corps 2 peuvent éventuellement se fixer par le dessous de la plaque P, avec des organes femelles prévus dans une partie périphérique du corps 2 (comme dans le cas de la figure 1 par exemple). Alternativement, les organes d'attache peuvent se visser ou s'ancrer par l'extérieur. Ces organes d'attache 6 permettent au corps 2 de se monter autour de l'ouverture O, à distance radiale du bord circonférentiel bc délimitant l'ouverture, contre le boîtier P, en positionnant le canal C2 à l'aplomb de l'ouverture O ou plus généralement en suivant la direction longitudinale du corps 2 (suivant l'axe central).

L'agencement de ventilation 1 peut former un agencement compact, réactif à une situation d'urgence dans le boîtier en limitant la perte de charge, ce qui peut avantageusement éviter des dégradations néfastes, éviter la propagation de feu, tout en permettant un effet protecteur des composants plastiques de l'unité de ventilation se montant sur la paroi P, vis-à-vis des particules incandescentes et des flammes. Le montage de la partie PM pare-flamme est compatible avec différents ordres dans le montage, par exemple à la fois pour :
- le cas d'un montage préalable d'une pièce métallique ou similaire, formant le composant 4, sur le corps 2 pour obturer l'entrée du canal C2 et permettre d'obtenir l'unité de ventilation (préassemblé avec l'élément d'obturation 3 , typiquement), avant le montage sur la paroi P qui se fait de préférence en deux temps (fixation directe du composant 4 via le smoyens de fixation 5 puis établissement de la connexion CC) ;
- et le cas inverse avec la pièce du composant structurel 4 d'abord montée sur la paroi P avec insertion sélective des éléments de retenue 50, 50', avant de poser et fixer le reste de l'unité de ventilation par-dessus le composant structurel 4.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

Par exemple, bien que les figures 1 à 4 montrent un contour annulaire (typiquement circulaire) pour l'ouverture O et pour le bord externe de plaque prévu pour le composant structurel 4, d'autres dispositions sont possibles. En variante, la bordure périphérique du composant 4 est rectangulaire, polygonale ou en carré, ou encore de forme oblongue ou ovale. Le canal C2 et/ou le composant 4 peuvent en outre présenter une géométrie différente de cette de l'ouverture, avec de préférence une circonférence du composant 4 qui ne s'étend pas jusqu'à l'élément d'étanchéité annulaire J. Pour une bonne compacité, la bordure de la partie de grille du composant 4 peut suivre le bord de l'entrée du canal C2, en recouvrant axialement ce bord (donc en couvrant la totalité du périmètre de l'entrée du canal C2).
Sur le composant, des pattes élastiques (clips) sont par exemple réalisées par emboutissage et dans un nombre variable pour former les éléments de retenue 50, 50'. Bien entendu pour recouvrir une ouverture O de forme rectangulaire, on peut prévoir au moins quatre pattes élastiques (ou au moins six) - par exemple en s'adaptant à la longueur de la forme rectangulaire.

Enfin, l'expression boîtier de batterie doit être comprise dans un sens général, le boîtier pouvant renfermer un ou plusieurs groupes d'accumulateurs aptes à fournir une énergie sous forme électrique ou énergie exploitable sous une quelconque forme pour une conversion en énergie électrique.

La paroi du boîtier P incluant l'ouverture O peut présenter n'importe quelle orientation. Bien que l'exemple non limitatif de la figure 4 correspond à une orientation de cette plaque/paroi dans un plan généralement horizontal pour disposer d'un couvercle ou élément d'obturation 3 surmontant axialement (par le dessus) le corps 2 permettant la connexion de cet élément 3, de sorte que l'axe X est ici vertical, d'autres dispositions sont permises, notamment avec une unité de ventilation montée latéralement sur le boîtier de batterie.

## Revendications

1. Agencement (1) de ventilation pour boîtier de batterie, en particulier pour boîtier comprenant une ou plusieurs batteries, l'agencement (1) comprenant :
- un corps (2) en matériau plastique pourvu d'une paroi latérale, le corps (2) formant un connecteur qui se raccorde par une connexion (CC) sur une paroi (P) du boîtier afin de couvrir par l'extérieur du boîtier une ouverture (O) prévue dans la paroi (P) du boîtier ;
- un canal (C2), prévu dans le corps (2) pour guider un écoulement gazeux (FG) s'échappant du boîtier par l'ouverture (O) suivant un axe longitudinal (X) du canal ;
- un élément d'obturation (3) solidarisé au corps (2), l'élément d'obturation (3) recouvrant le canal (C2) sur un côté externe opposé à l'ouverture (O) ;
- une partie protectrice (PM) portée par ou recouvrant le corps (2) dans une disposition sous-jacente au corps sur un côté interne à l'opposé de l'élément d'obturation (3), la partie protectrice (PM) incluant un composant structurel (4), dont une portion centrale de protection (4a) pare-flamme obture ou recouvre l'ouverture (O) en s'étendant transversalement à l'axe longitudinal (X) ; et
- une zone de bride (4b), portée par ou formée sur le composant structurel (4) en s'étendant autour de la portion centrale, la zone de bride (4b) étant disposée à l'extérieur du boîtier en étant engagée par le corps et/ou solidarisée au corps (2), la zone de bride (4b) permettant de plaquer le composant structurel (4) contre une portion de bordure de l'ouverture ; **caractérisé en ce que** le composant structurel (4), métallique ou consistant en un matériau réfractaire thermo-résistant, est choisi parmi une grille et un bouclier perméable aux gaz et inclut des moyens de fixation (5) qui :
- sont configurés pour s'étendre et s'engager sous un ou des rebords de la paroi (P) du boîtier, à l'opposé du corps (2) ; et
- permettent, par un effet anti-retrait du composant (4) résultant de l'engagement des moyens de fixation (5), qui correspond à une retenue axiale par la paroi (P) du boîtier, au composant structurel (4) de se verrouiller dans une position fixe de montage sur l'ouverture (O), ce grâce à quoi le composant structurel (4) conserve sa position fixe, aussi bien en cas de destruction de la connexion (CC) du corps sur la paroi de boîtier qu'en cas de fonte du matériau plastique (M) du corps (2).

2. Agencement selon la revendication 1, dans lequel les moyens de fixation (5) incluent au moins deux éléments saillants de retenue (50 ; 50') qui :
- chacun, font saillie longitudinalement depuis une face (F4) du composant orientée à l'opposé du canal (C2), vers l'intérieur jusqu'à une partie de blocage (CR ; CR'), pour venir en prise axiale sur l'intérieur de la paroi (P) du boîtier, de préférence en étant insérés via l'ouverture (O), pour disposer les parties de blocage (CR ; CR') en position sous-jacente à la paroi (P) du boîtier ; et
- permettent au composant structurel (4) de s'auto-verrouiller dans ladite position fixe de montage sur l'ouverture (O).

3. Agencement selon la revendication 2, dans lequel les au moins deux éléments saillants de retenue portent ou incluent chacun un clip (50) permettant un emboîtement sans rotation de la partie protectrice (PM).

4. Agencement selon la revendication 2, comprenant la paroi P pourvue d'une délimitation circulaire de l'ouverture (O),
dans lequel les au moins deux éléments saillants de retenue (50') font partie d'un ensemble de connexion rotatif, de préférence un ensemble de connexion baïonnette par coopération avec des gorges (G) prévues sur la paroi (P) du boîtier, l'ensemble de connexion rotatif verrouillant la position fixe de montage lors d'une rotation autour d'un axe de l'ouverture (O) qui est confondu ou parallèle à l'axe longitudinal (X) du canal (C2).

5. Agencement selon la revendication 2, 3 ou 4, comprenant la paroi (P) prise en sandwich entre la zone de bride (4b) et les parties de blocage (CR ; CR') formant des extrémités terminales des éléments saillants de retenue (50 ; 50'),
dans lequel le composant structurel (4) inclut une grille dont les ouvertures (O4) ont une dimension au moins égale à 0,5 mm et préférentiellement jusqu'à 5 mm, la grille incluant la zone de bride (4b) dans une partie de marge annulaire de la grille qui est en chevauchement direct sur la paroi (P).

6. Agencement selon la revendication précédente, dans lequel le corps (2) est fixé à ladite paroi (P) par des moyens de fixation (PF2, 6) réalisant la connexion (CC) en périphérie de la grille et permettant de serrer la grille entre une face axiale annulaire du corps (2) et la paroi (P) du boîtier,
dans lequel la grille ou le composant structurel (4) inclut des organes de positionnement (14), creux et orientés à l'opposé des moyens de fixation (5), permettant de bloquer en position le corps (2) avant de réaliser la connexion (CC) en coopérant avec des pions (9) ou inserts portés par le corps (2) qui s'engagent chacun avec serrage dans une cavité (40) d'un organe de positionnement (14) correspondant, avec un premier niveau d'insertion dans la cavité (40),
et dans lequel la grille est comprimée suffisamment lors d'une action de serrage s'exerçant lors de l'établissement de la connexion (CC) pour :
- verrouiller le premier niveau d'insertion ou permettre un enfoncement axial supplémentaire des pions (9) ou insert dans lesdites cavités, avec un deuxième niveau d'insertion dans la cavité ; et
- rendre la grille et le corps (2) solidaires et fixes l'un par rapport à l'autre sans possibilité de mouvement dans ladite position fixe de montage sur l'ouverture (O), même en cas de retrait ultérieur ou destruction des moyens de fixation (PF2, 6) réalisant la connexion (CC).

7. Agencement selon l'une quelconque des revendications précédentes, dans lequel la partie protectrice (PM) est en une seule pièce qui constitue la grille,
et dans lequel le corps (2) et la partie protectrice (PM) sont fixés l'un à l'autre pour former une unité de ventilation préassemblée, qui s'étend suivant l'axe longitudinal (X) entre une première extrémité axiale par laquelle vient se monter l'élément d'obturation (3) et une deuxième extrémité axiale formant une face, de préférence plane, qui inclut la face intérieure (F4) de la grille, avec les moyens de fixation (5) qui sont distribués à différentes positions angulaires sur une zone périphérique de cette face intérieure (F4).

8. Agencement selon la revendication 7, dans lequel la grille est plate ou plane au moins dans la portion centrale (4a),
et dans lequel les moyens de fixation (5) comportent au moins deux éléments saillants de retenue (50 ; 50') qui sont joints à la face intérieure (F4), préférentiellement plane, par une zone de pli (45) délimitée entre deux bords coupés.

9. Agencement selon l'une quelconque des revendications précédentes, dans lequel l'élément d'obturation (3) est mobile ou amovible longitudinalement par rapport au corps (2), en formant un couvercle d'urgence apte à être éclaté, ou éjecté ou déplacé plus loin du canal (C2) pour libérer un passage permettant l'échappement massif d'un flux gazeux (FG) en cas d'emballement thermique.

10. Procédé d'assemblage d'un agencement (1) de ventilation pour boîtier de batterie, en utilisant une grille ou un bouclier perméable aux gaz apte à se monter sous un corps (2) en matériau plastique (M) prévu pour équiper le boîtier de batterie, le corps (2) délimitant un canal (C2) formant une sortie accessible via une ouverture (O) dudit boîtier lorsque le corps (2) est fixé avec serrage axial sur une paroi du boîtier par une connexion (CC) pour recouvrir ladite ouverture (O), un élément d'obturation (3) recouvrant le canal (C2) tout en permettant des échanges gazeux de compensation et/ou une évacuation gazeuse d'urgence, le procédé comprenant les étapes consistant essentiellement à :
- choisir le composant structurel (4) formé par la grille ou bouclier, métallique ou consistant en un matériau réfractaire thermo-résistant, afin qu'il présente une géométrie et un dimensionnement adaptés pour une fonction pare-flamme en pouvant recouvrir l'essentiel ou la totalité de l'ouverture (O) ;
- réaliser une première fixation du composant structurel (4) formé par la grille ou bouclier, au corps (2), en le disposant sous-jacent au corps (2) à l'opposé d'une sortie du canal (C2) permettant l'évacuation de gaz provenant du boîtier, le composant structurel (4) incluant une portion centrale de protection (4a) ;
- réaliser une deuxième fixation, précédant ou suivant la première fixation, pour connecter le composant structurel (4) à une paroi (P) de délimitation de l'ouverture (O), d'une part en s'appuyant sur la paroi (P) sur un côté externe du boîtier par une zone de bride (4b) prévue dans le composant structurel (4) en s'étendant autour de ladite portion centrale, et d'autre part en engageant des moyens de fixation (5), portés par le composant structurel (4) sous ladite paroi (P) du boîtier, à l'opposé du corps (2), pour venir en prise axiale sur l'intérieur de cette paroi (P) du boîtier ; et
le procédé permettant, après la première fixation et la deuxième fixation, de verrouiller axialement le composant structurel (4) dans une position fixe de montage sur l'ouverture (O) et dans une position de protection pare-flamme du canal (C2), les moyens de fixation (5) appartenant au composant structurel (4) de sorte que ce dernier peut conserver la position fixe de montage sur l'ouverture (O) aussi bien en cas de destruction de la connexion (CC) avec serrage axial du corps (2) sur la paroi (P) de boîtier qu'en cas de fonte du matériau plastique (M) du corps (2), sachant que la portion centrale de protection (4a) obture ou recouvre l'ouverture (O) en s'étendant transversalement à un axe longitudinal (X) du canal (C2).

11. Procédé d'assemblage selon la revendication 10, dans lequel le composant structurel (4) consiste en une plaque métallique, la première fixation étant réalisée avant la deuxième fixation en entourant un bord externe du composant structurel (4) par une base (2a) du corps (2) qui porte un élément d'étanchéité annulaire (J),
et dans lequel la deuxième fixation est permise par au moins deux éléments saillants de retenue (50 ; 50'), appartenant au moyens de fixation (5), qui :
- chacun, font saillie longitudinalement depuis une face (F4) du composant orientée à l'opposé du corps (2), vers l'intérieur jusqu'à une partie de blocage (CR ; CR'), pour venir en prise axiale sur l'intérieur de la paroi (P) du boîtier, de préférence en étant insérés via l'ouverture (O), pour disposer les parties de blocage (CR ; CR') en position sous-jacente à la paroi (P) du boîtier ; et
- permettent au composant structurel (4) de s'auto-verrouiller dans ladite position fixe de montage sur l'ouverture (O).
